# EUROPÄISCHE PATENTSCHRIFT

(11) **EP 1 043 431 B1**
(45) Veröffentlichungstag und Bekanntmachung des Hinweises auf die Patenterteilung: **02.10.2002**
(21) Anmeldenummer: 00103286.1
(22) Anmeldetag: 18.02.2000
(51) Int. Cl.: D01H 4/12

(54) **Lagerung eines Spinnrotors einer Offenend-Spinnvorrichtung**
Bearing for a spinning rotor in an open-end spinningdevice
Palier pour un rotor de filage dans un métier à filer à bout libre

(30) Priorität: 09.03.1999 DE 19910279
(43) Veröffentlichungstag der Anmeldung: 11.10.2000
(73) Patentinhaber: W. SCHLAFHORST AG & CO., 41061 Mönchengladbach (DE)
(72) Erfinder: Wassenhoven, Heinz-Georg, 41065 Mönchengladbach (DE); Schlömer, Bert, 52525 Heinsberg (DE)

(56) Entgegenhaltungen:
- DE-A- 19 729 191
- US-A- 3 747 998

## Beschreibung

Die Erfindung betrifft eine Lagerung eines Spinnrotors einer Offenend-Spinnvorrichtung mit den Merkmalen des Oberbegriffes des Anspruches 1.

Im Zusammenhang mit Offenend-Rotorspinnmaschinen sind Spinnaggregate bekannt, bei denen der mit hoher Drehzahl umlaufende Spinnrotor mit seinem Rotorschaft im Lagerspalt einer Stützscheibenlageranordnung abgestützt und über ein endseitig angeordnetes Axiallager fixiert ist.

Die Achsen der beiden Stützscheibenpaare sind dabei derart geschränkt, daß auf den Rotorschaft ein Axialschub ausgeübt wird, der den Rotorschaft in Anlage an dem mechanischen Axiallager hält.

Diese Art der Lagerung von Offenend-Spinnrotoren, die beispielsweise in der DE-OS 25 14 734 beschrieben ist, hat sich in der Praxis bewährt und ermöglicht Rotordrehzahlen von > 100.000 Umdrehungen pro Minute.

Nachteilig bei dieser Art der Spinnrotorlagerung ist allerdings, daß aufgrund der Schränkung der Stützscheiben zwischen den Laufflächen der Stützscheiben und dem Rotorschaft erhöhte Reibung auftritt, die zu einer Erwärmung der Laufflächen der Stützscheiben führt. Durch diese Reibungswärme werden nicht nur die Laufflächen der Stützscheiben erheblich beansprucht, sondern zur Überwindung dieser Reibung ist auch zusätzliche Energie notwendig. Die bekannten mechanischen Axiallager sind des weiteren, auch bei vorschriftsmäßiger Schmierung, einem nicht unerheblichen Verschleiß unterworfen.

Es sind daher in der Vergangenheit bereits Versuche unternommen worden, diese mechanischen Axiallager durch verschleißfreie Axiallager, zum Beispiel Luftlager oder Magnetlager, zu ersetzen.
Da auch bei Luftlagern ein Axialschub des Rotorschaftes in Richtung auf das Axiallager erforderlich ist, konnten die meisten der vorgenannten, grundsätzlichen Probleme mit Luftlagern nicht beseitigt werden.

In der DE 195 42 079 A1 ist eine axiale Magnetlageranordnung beschrieben, bei der ein Teil der Magnetlagerelemente stationär im Gehäuse eines Axiallagers und der andere Teil der Magnetlagerelemente lösbar am Rotorschaft des Spinnrotors angeordnet sind. Bezüglich der Anbindung der mit dem Spinnrotor umlaufenden Magnetlagerelemenete am Rotorschaft werden verschiedene Varianten vorgeschlagen.

Einige dieser Varianten betreffen eine kraftschlüssige, andere eine formschlüssige Befestigung der mitrotierenden, im Bedarfsfall leicht lösbaren Magnetlagerelemente.
Mit diesen bekannten Magnetlagereinrichtungen ist zwar eine korrekte axiale Fixierung des Rotorschaftes auf der Stützscheibenlageranordnung möglich und es ist außerdem sichergestellt, daß der Spinnrotor bei Bedarf problemlos einund ausgebaut werden kann, es hat sich allerdings gezeigt, daß die vom Prinzip her vorteilhafte, im Bedarfsfall leicht lösbare, kraftschlüssige Befestigung der Magnetlagerkomponente am Rotorschaft noch verbesserungsfähig ist. Problematisch bei derartigen Magnetlagereinrichtungen ist insbesondere die Befestigung der mitrotierenden Magnetlagerelemente am Rotorschaft, da aufgrund der hohen Drehzahl des Spinnrotors an die Auswuchtgüte dieser Verbindung hohe Anforderungen gestellt werden.

Eine Offenend-Rotorspinneinrichtung mit einem permanentmagnetischen Axiallager ist auch durch die AT-PS 270 459 bekannt.

Bei dieser Lageranordnung sind am Schaftende des Rotorschaftes eines Spinnrotors ferromagnetische Ringansätze angeordnet, denen Polschuhe eines in diesem Bereich schwenkbar gelagerten Permanentmagnets gegenüberstehen. Die durch eine solche Anordnung erzielbare Bündelung der magnetischen Kraftlinien des Permanentmagnets führte zu einer relativ steifen Fixierung des Rotorschaftes im Lagerzwickel einer Stützscheibenlagerung.

Nachteilig bei einer derartig gestalteten Magnetlageranordnung ist allerdings, daß die am Rotorschaft angeordneten Ringansätze einen deutlich größeren Durchmesser aufweisen als der Rotorschaft selbst. Da die im Durchmesser deutlich größeren Ringansätze den Ein- und Ausbau des Spinnrotors, insbesondere dessen frontseitige Montage erheblich erschweren bzw. verhindert, konnte sich diese bekannte Magnetlageranordnung in der Praxis nicht durchsetzen.

Des weiteren ist durch die DE 30 47 606 A1 eine Lagerung für eine mit relativ hoher Drehzahl umlaufende Spindel einer Textilmaschine bekannt.
Die Spindel ist dabei in radialer Richtung über eine stützscheibenlagerähnliche Dreipunktlageranordnung abgestützt und wird in axialer Richtung durch ein Magnetlager gesichert. Die Spindel weist endseitig einen im Durchmesser abgesetzten Lagerbereich mit zwei ferromagnetischen Ringansätzen auf.
Am Lagergehäuse ist eine aus einem nichtmagnetischem Material gefertigte Muffe festgelegt, in die ein ringförmiges Permanentmagnetelement, das von seitlichen Polscheiben eingeschlossen wird, eingelassen ist. Im eingebauten Zustand der Spindel stehen die ferromagnetischen Ringansätze des Spindelschaftes den Polscheiben des im statischen Lagerelement festgelegten Permanentmagnetelementes gegenüber.

Wenngleich diese bekannte Ausführungsform einen relativ problemlosen Ein- und Ausbau der Spindel in axialer Richtung ermöglicht, fand die Einrichtung aufgrund ihrer mangelnden axialen Lagersteifigkeit keinen Einzug in die Praxis.

Durch die gattungsgemäße DE 197 29 191 A1 ist des weiteren eine Lagerung eines Spinnrotors einer Offenend-Spinnvorrichtung bekannt, bei der der Rotor radial im Lagerzwickel einer Stützscheibenlagerung abgestützt und durch ein magnetisches Axiallager axial positioniert ist. Das Axiallager verfügt über eine statische Lagerkomponente mit wenigstens zwei beidseits durch Polscheiben begrenzte Permanentmagnetringe. Diese Permanentmagnetringe sind in einem Lagerkörper so angeordnet, daß sich im Einbauzustand gleichsinnige Pole (N/N oder S/S) gegenüberstehen. Der Rotorschaft weist mindestens drei im Abstand der Polscheiben angeordnete ferromagnetische Stege auf.

Des weiteren enthält die DE 197 29 191 A1 einen Hinweis darauf, daß das Lagergehäuse mit seiner Mittelachse gegenüber der durch die Lage des Lagerzwickels der Stützscheiben vorgegebenen Mittelachse des Rotorschaftes abgesenkt ist. Hierdurch wird dem Rotorschaft im Axiallagerbereich eine nach oben gerichtete radiale Kraftkomponente erteilt. Dadurch wird zwar beim Reinigen des Rotors, wenn der Rotor nicht mehr durch die Andrückrolle, die den seinen Antrieb bewirkenden maschinenlangen Tangentialriemen auf den Rotorschaft preßt, in den Lagerzwickel gedrückt wird, besser in einer Horizontallage gehalten. Jedoch wirkt sich diese Radialkomponente nachteilig während des Antriebs des Rotors aus.

Es ist deshalb Aufgabe der Erfindung, eine gattungsgemäße Lagerung eines Spinnrotors weiter zu verbessern.

Diese Aufgabe wird erfindungsgemäß durch die kennzeichnenden Merkmale des Anspruches 1 gelöst.

Vorteilhafte Ausgestaltungen der Erfindung sind Gegenstand der Unteransprüche.

Der erfindungsgemäße Versatz der Stützscheibenlagerung des Rotors gegenüber der statischen Lagerkomponente des Axiallagers gewährleistet eine verbesserte Führung des Rotors im Lagerzwickel der Stützscheiben. Vor allem erhöht sich die Laufruhe des Rotors und verringert sich der Einfluß von laufzeitbedingten Veränderungen durch Walkarbeit im Stützscheibenbelag, indem die Haftung des Rotorschaftes auf dem Stützscheibenbelag innerhalb des Lagerzwickels verbessert ist. Im Ergebnis gestattet die Erfindung damit eine weitere Erhöhung der möglichen Rotordrehzahlen und damit Produktivitätsverbesserung.

Die durch den Lagerversatz erzielte radiale Kraftkomponente auf den Rotorschaft führt während des Reinigens des Rotors zu einer erhöhten Kippneigung des Rotorschaftes aus dem Lagerzwickel der Stützscheiben heraus. Um zu verhindern, daß dabei die ferromagnetischen Stege des Rotorschaftes Kontakt mit den zwischen den Magneten angeordneten Polscheiben bekommen, ist auf der dem Lagerzwickel abgewandten Seite des Lagers in entsprechend geringem Abstand zum Rotorschaft eine Stützfläche mit reibwertreduzierender und verschleißgeschützter Oberflächenschicht vorhanden. Der Rotorschaft bekommt mindestens beim Reinigen des Rotors Kontakt mit dieser Oberflächenschicht, auf der er sich dann abstützt, ohne daß es zu dem erwähnten Kontakt zwischen Stegen und Polscheiben kommt.

Dabei führt die Reibwertreduzierung der Oberflächenschicht beim Drehen des Rotors während des Reinigens nicht zu einer spürbaren oder gar schädlichen Erwärmung des Rotorschaftes. Eine solche Erwärmung könnte, insbesondere bei einer Ausfüllung der Zwischenräume zwischen den Stegen des Rotorschaftes mit einem nicht temperaturbeständigen Material, zu dessen Schmelzen und Verkleben des gesamten Lagerbereiches führen. Die Ausbildung als verschleißgeschützte Oberfläche sichert, daß sich die Schicht nicht oder nur sehr langsam abträgt, so daß sich die Position der Stützfläche nicht spürbar verändert und die reibwertreduzierenden Eigenschaften erhalten bleiben.

Die Anordnung der Stützfläche beziehungsweise der reibwertreduzierenden, verschleißgeschützten Oberflächenschicht auf einem Ringeinsatz gestattet ein problemloses Auswechseln desselben. Dementsprechend ist es auch möglich, diesen gesamten Ringeinsatz aus diesem Material herzustellen.

Die radiale Justierbarkeit des Ringeinsatzes gestattet eine Einstellung des Ringspaltes nach den Erfordernissen. Vorteilhaft ist ein auf der dem Lagerzwickel abgewandten Seite schmalerer Ringspalt, da ein Verkanten des Rotorschaftes beim Reinigen der Rotortasse dadurch noch mehr begrenzt wird.

Ausgehend davon, daß der Rotor beim Reinigen durch den auf die Rotortasse aufgesetzten Antrieb in das Axiallager gedrückt wird, ist es vorteilhaft, auch im Bereich des Rotorschaftendes axial eine Stützfläche vorzusehen, die einerseits die axiale Bewegung des Rotors begrenzt, und andererseits aufgrund der auch hier eingesetzten reibwertreduzierenden, verschleißgeschützten Oberflächenschicht eine thermische Belastung des Rotorschaftes im Axiallagerbereich minimiert.

Durch das Kippen des Rotors beim Reinigen kann sich der Rotor, außer an den genannten Stützflächen, auch noch zusätzlich mit seinem Schaftende auf der dem Lagerzwickel zugewandten Seite auf einer dafür vorgesehenen Stützfläche abstützen, die ihrerseits ebenfalls mit einer reibwertreduzierenden, verschleißgeschützten Oberflächenschicht versehen ist.

An dieser Stelle ist darauf hinzuweisen, daß die Richtungsangabe mit Bezugnahme auf den Lagerzwickel immer radial bezüglich der Rotorachse zu verstehen ist.

Vorteilhaft sind die beiden zuletzt genannten Stützflächen durch eine in einer Aufnahme gehaltene Hülse gebildet. Diese Hülse kann ebenfalls vollständig aus dem reibwertreduzierten, verschleißgeschützten Material bestehen. Ein kostengünstiges Material mit den genannten Eigenschaften ist beispielsweise ein Kohlefaser- oder Graphitwerkstoff.

Das angegebene Verhältnis des Mittelachsenversatzes zur Durchmesserdifferenz zwischen Polscheiben und Stegen begrenzt den erfindungsgemäß erfolgreichen Versatz der Mittelachsen. Bezogen auf die erfindungsgemäße Lageranordnung ergeben sich dabei vorteilhaft auch entsprechende Absolutwerte.

Die im Anspruch 11 angegebene Dimensionierung von Magnetringen und Polscheiben ist in bezug auf die entsprechenden Abmessungen und die Lagersteifigkeit optimiert. Dabei ist die erforderliche Lagersteifigkeit auch gegeben, obwohl auf der dem Lagerzwickel abgewandten Seite der statischen Lagerkomponente aufgrund des Lagerversatzes deutlich größere das Magnetfeld schwächende Luftspalte zwischen Stegen und Polringen bestehen. Prinzipiell sind die Relationen so auszuwählen, daß bei einer vergrößerten Querschnittsfläche der Magnete auch entsprechend vergrößerte Querschnittsflächen der Polscheiben ausgewählt werden, um eine magnetische Sättigung der Polscheiben zu vermeiden, durch die der durch die Magnete erzielbare Magnetfluß begrenzt wird.

Zur Erzielung des für die funktionsnotwendige Lagersteifigkeit erforderlichen Magnetflusses in Verbindung mit dem vorhanden Bauraum ist es vorteilhaft, als Magnetwerkstoff Seltenerde auszuwählen.

Es ist vorteilhaft, eine Polscheibe, die zwischen Magnetringen liegt, mit einer etwa doppelten Dicke gegenüber den außenliegenden Polscheiben auszubilden, da diese von beiden benachbarten Magneten den Magnetfluß leitet. Anderenfalls wäre im Bereich dieser mittleren Polscheibe auch mit einer Sättigung mit den bereits erwähnten Folgen zu rechnen.

Weiter läßt sich die Lagersteifigkeit optimieren, wenn Stege und Polscheiben die gleiche Breite aufweisen. Ebenso wirkt es sich vorteilhaft auf die Ausbildung der Magnetfelder aus, wenn die gegenüberliegenden Kanten von Polscheiben und Stegen unverrundet sind.

Als nichtmagnetischer Werkstoff zur Füllung der Zwischenräume zwischen den Stegen des Rotorschaftes kommen vorteilhaft Kupfer oder Kupferverbindungen in Frage, die gegenüber Kunststoff eine bessere Hitzebeständigkeit aufweisen. Jedoch sind auch andere nichtmagnetische metallische Werkstoffe, wie Zinn, Zink oder Aluminium einsetzbar.

Um die notwendige Lagersteifigkeit auch bei geringem Platzbedarf zu erreichen, ist die hohe bei Seltenerdmagneten vorhandene Remanenz von erheblichem Vorteil (Anspruch 17).

Unverrundete Kanten von Polscheiben und Stegen verbessern die Magnetflußdichte und damit den Beitrag zur Erhöhung der Lagersteifigkeit.

Als eine Alternative weist der Rotorschaft über seine gesamte Länge, das heißt, auch im Bereich des Axiallagers einen gleichbleibenden Durchmesser auf, was zu Vorteilen im Fertigungsaufwand führt. Als zweite Alternative kommt eine Abstufung des Rotorschaftdurchmessers im Bereich des Axiallagers infrage, die bei hohen Rotordrehzahlen, insbesondere über 150 000 rpm, die Laufruhe des Rotors aufgrund der signifikanten Anhebung der Eigenfrequenz über die Betriebsdrehzahl verbessert. Die absolute Tiefe der Einstiche, die dem Herausarbeiten der Stege dienen, verringert sich entsprechend, um die Stabilität des Rotorschaftes im Bereich des Axiallagers zu gewährleisten.

Durch die erfindungsgemäße Dimensionierung der Permanentmagnetringe in Verbindung mit den Polscheiben sowie der Stegbreite kann dennoch die für eine sichere Funktion erforderliche axiale Lagersteifigkeit aufrechterhalten werden.

Weitere Einzelheiten der Erfindung sind einem nachfolgend anhand der Zeichnungen dargestellten Ausführungsbeispiel entnehmbar.

Es zeigt:
- Fig. 1: eine Offenend-Spinnvorrichtung mit einem Spinnrotor, der mit seinem Rotorschaft im Lagerzwickel einer Stützscheibenlagerung abgestützt und über ein endseitiges magnetisches Axiallager positioniert ist,
- Fig. 2: ein im Schnitt dargestelltes permanentmagnetisches Axiallager,
- Fig. 3: eine Vorderansicht des in Figur 2 dargestellten Lagers,
- Fig. 4: eine Vorderansicht einer Variante zu Figur 3 und
- Fig. 5: eine im Schnitt dargestellte Variante des in den Figuren 2 und 3 dargestellten Axiallagers.

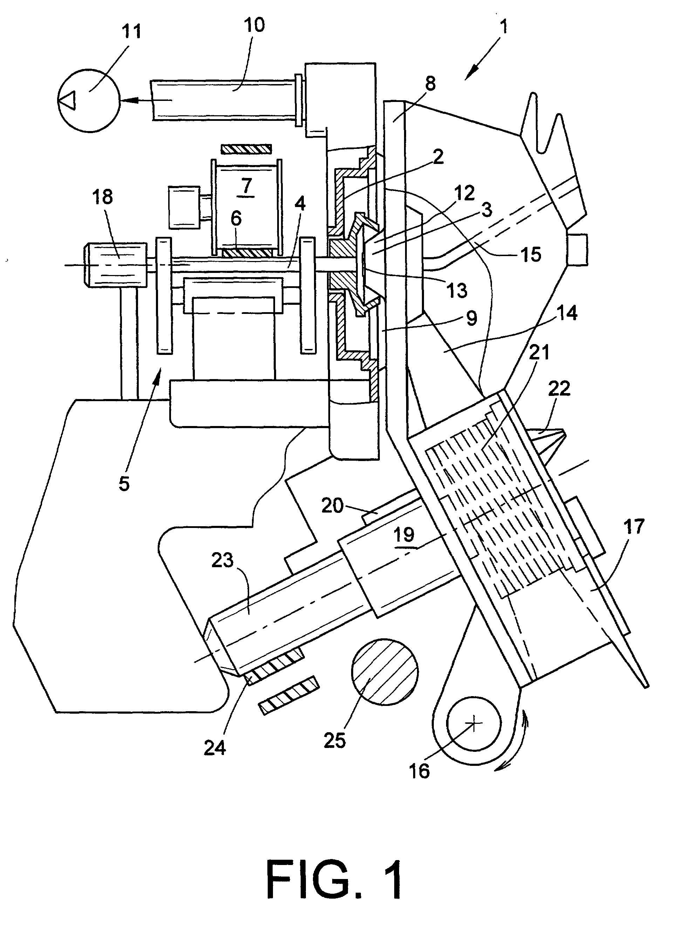

Das in Figur 1 dargestellte Offenend-Spinnaggregat trägt insgesamt die Bezugszahl 1.

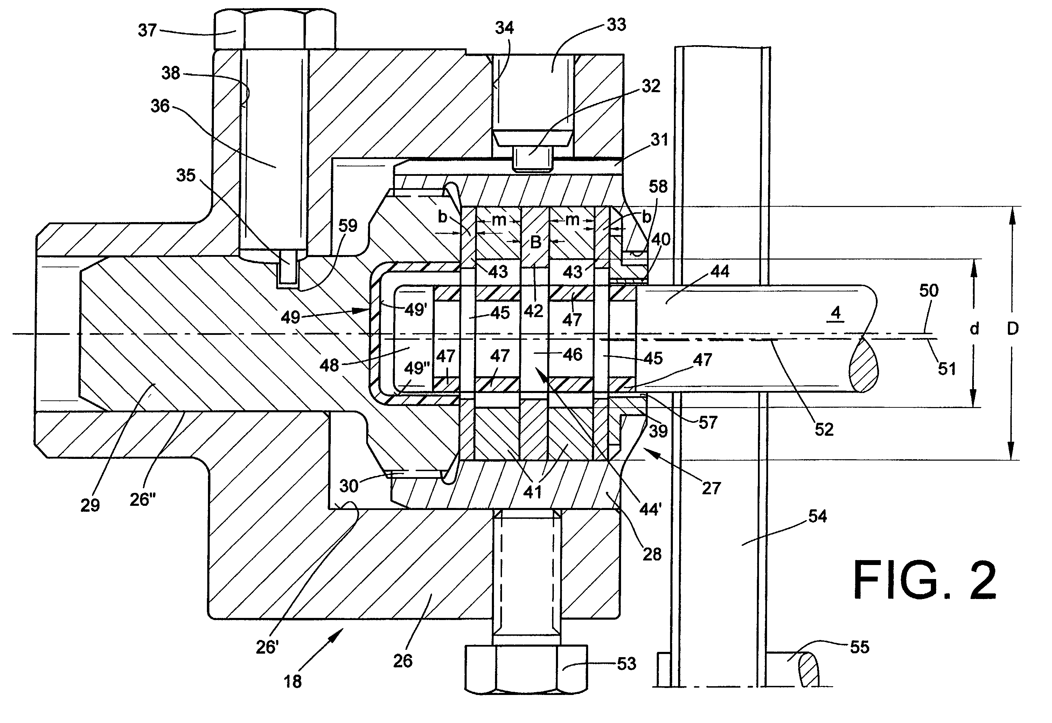

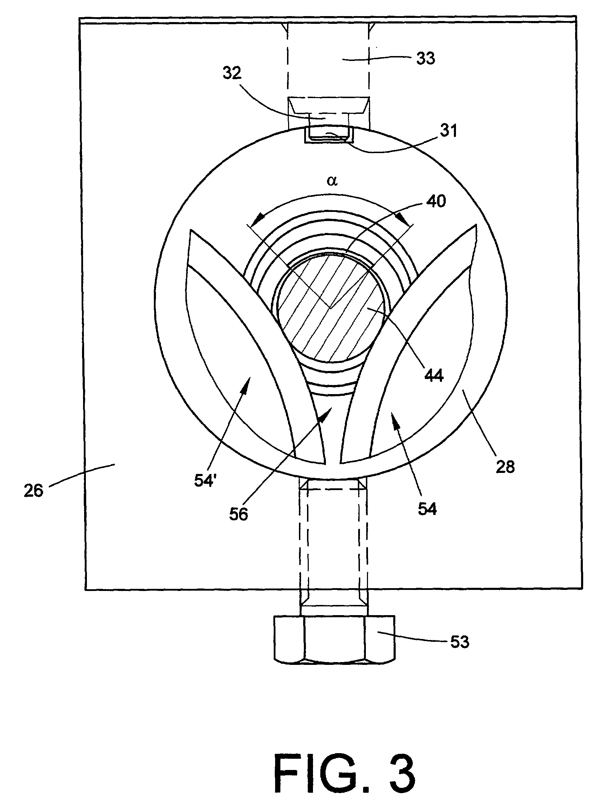

Das Spinnaggregat verfügt dabei, wie bekannt, über ein Rotorgehäuse 2, in dem die Spinntasse eines Spinnrotors 3 mit hoher Drehzahl umläuft. Der Spinnrotor 3 ist dabei mit seinem Rotorschaft 4 im Lagerzwickel einer Stützscheibenlagerung 5 abgestützt und wird durch einen maschinenlangen Tangentialriemen 6, der durch eine Andrückrolle 7 angestellt wird, beaufschlagt. Die axiale Fixierung des Rotorschaftes 4 erfolgt über ein permanentmagnetisches Axiallager 18, das in den Figuren 2 und 3 im Detail dargestellt ist.

Wie üblich, ist das an sich nach vorne hin offene Rotorgehäuse 2 während des Betriebes durch ein schwenkbar gelagertes Deckelelement 8, in das eine (nicht näher dargestellte) Kanalplatte mit einer Dichtung 9 eingelassen ist, verschlossen.
Das Rotorgehäuse 2 ist außerdem über eine entsprechende Absaugleitung 10 an eine Unterdruckquelle 11 angeschlossen, die den im Rotorgehäuse 2 notwendigen Spinnunterdruck erzeugt.

Im Deckelelement 8 ist ein Kanalplattenadapter 12 angeordnet, der die Fadenabzugsdüse 13 sowie den Mündungsbereich des Faserleitkanales 14 aufweist. An die Fadenabzugsdüse 13 schließt sich ein Fadenabzugsröhrchen 15 an.
Außerdem ist am Deckelelement 8, das um eine Schwenkachse 16 begrenzt drehbar gelagert ist, ein Auflösewalzengehäuse 17 festgelegt. Das Deckelelement 8 weist des weiteren rückseitig Lagerkonsolen 19, 20 zur Lagerung einer Auflösewalze 21 beziehungsweise eines Faserbandeinzugszylinders 22 auf.
Die Auflösewalze 21 wird im Bereich ihres Wirtels 23 durch einen umlaufenden, maschinenlangen Tangentialriemen 24 angetrieben, während der (nicht dargestellte) Antrieb des Faserbandeinzugszylinders 22 vorzugsweise über eine Schneckengetriebeanordnung erfolgt, die auf eine maschinenlange Antriebswelle 25 geschaltet ist.

Figur 2 zeigt das erfindungsgemäße Axiallager im Detail, wobei das Axiallager 18 im Schnitt dargestellt ist. Vom Radiallager 5 ist eine Stützscheibe 54 mit Welle 55 in Figur 2 teilweise dargestellt, während in Figur 3 Teile von zwei Stützscheiben 54 und 54' dargestellt sind, um die Lage des Lagerzwickels 56 der hinteren Stützscheiben sichtbar zu machen. Ein entsprechendes Stützscheibenpaar ist beabstandet in der Nähe der Spinntasse des Spinnrotors 3 angeordnet, wie das der Figur 1 zu entnehmen ist.

Das magnetische Axiallager 18 besteht aus einer statischen Lagerkomponente 27, die in einem Lagerhäuse 26 axial justierbar gehalten ist. Die aktiven Lagerbestandteile in Form von Permanentmagnetringen 41 mit jeweils beidseitig angeordneten Polringen 45 und 46 sind innerhalb einer Lagerbuchse 28 angeordnet. Eine Aufnahme 29 ist rückseitig über ein Gewinde 30 mit der Lagerbuchse 28 verschraubt. Dabei werden die aktiven Lagerbestandteile 41 und 45, 46, die innerhalb der Lagerbuchse 28 geführt sind, gegen einen innerhalb einer Bohrung 58 im Frontteil der Lagerbuchse angeordneten Ringeinsatz 39 gepreßt. Dadurch ergibt sich einerseits eine stabile Lagerkonstruktion, andererseits eine unproblematische Demontierbarkeit des Lagers, um beispielsweise innerhalb des Lagers angeordnete Einzelteile auszutauschen.

Die Lagerbuchse 28 ist innerhalb einer Bohrung 26' des Lagergehäuses 26 und die Aufnahme in einer dazu abgesetzten Bohrung 26'' des Lagergehäuses 26 axial verschiebbar. Dadurch kann die stationäre Lagerkomponente 27 axial exakt so justiert werden, daß sich die spinntechnologisch optimale Lage der Rotortasse ergibt.

Um ein Verdrehen der Lagerbuchse 28 innerhalb des Lagergehäuses 26 zu vermeiden, greift ein Stift 32 eines in eine Bohrung 34 eingesetzten Bolzens 33 in eine Längsnut 31 der Lagerbuchse 28. Mittels eines in eine Nut 59 der Aufnahme 29 eingreifenden Zapfens 35 eines Exzenterbolzens 36 kann auf einfache Weise die axiale Justage der statischen Lagerkomponente 27 erfolgen. Der Exzenterbolzen 36 ist in eine Bohrung 38 des Lagergehäuses 26 eingesetzt. Er besitzt einen Sechskantkopf 37, der die Möglichkeit des Anschlusses eines Werkzeuges bietet. Mittels einer Feststellschraube 53, die das Lagergehäuse 26 gegen die Lagerbuchse 28 verspannt, kann die axiale Lage der statischen Lagerkomponente 27 fixiert werden.

Der Rotorschaft 4 kann durch eine Öffnung im Rotorgehäuse 2, durch die Lagerzwickel der Stützscheibenlagerung 5, durch eine Bohrung 57 des Ringeinsatzes 39 mit seinem die dynamische Lagerkomponente bildenden Axiallagerteil 44' in die statische Lagerkomponente 27 eingeführt werden, während der übrige, hauptsächlich der Radiallagerung des Spinnrotors 3 dienende Schaftteil 44 außerhalb des Axiallagers 18 verbleibt. In diesem Axiallagerteil 44' des Rotorschaftes 4 sind Einstiche 47 vorhanden, die mit nichtmagnetischem Material gefüllt sind, wobei sich zwischen diesen Einstichen 47 unterschiedlich breite Stege 45 und 46 ausbilden. Der Rotorschaft 4 bzw. der Rotor 3 sind aus Stahl mit ferromagnetischen Eigenschaften gefertigt. Diese Stege 45 und 46 fluchten bei vollständig in das Axiallager 18 eingeführtem Rotorschaft 4 mit beidseits der Permanentmagnetringe 41 angeordneten Polscheiben 42 und 43. Die Polscheiben 42 und 43 weisen dementsprechend die gleiche Breite auf wie die Stege 45 und 46. Die Breite B der mittleren Polscheibe 42 sowie des mittleren Steges 46 ist doppelt so groß wie die Breite b der äußeren Polscheiben 43 sowie äußeren Stege 45. Vorteilhaft beträgt die Breite b der Polscheiben 43 1 mm, währenddem die Breite B der mittleren Polscheibe 46 2 mm beträgt. Die Breite m der Permanentmagnetringe 41 beträgt jeweils 3,5 mm. Das Verhältnis des Außendurchmessers D der Permanentmagnetringe 41 zum Innendurchmesser d beträgt 1,7 : 1.

Die Permanentmagnetringe 41 sind durch axial polarisierte Seltenerdmagneten gebildet, bei denen sich gleiche Pole (N/N beziehungsweise S/S) gegenüberstehen. Das nichtmagnetische, die Einstiche 47 füllende Material ist eine Kupferlegierung, beispielsweise Messing, welches mit Hartlot auf die Welle gelötet ist. Andere nichtmagnetische Stoffe, das heißt, außer Kupferlegierungen auch Aluminium, Zinn oder Zink, kommen ebenfalls in Frage. Diese metallischen Stoffe haben gegenüber einer ansonsten auch möglichen Kunststoff-Füllung der Einstiche 47 den Vorteil der höheren Wärmebeständigkeit sowie Stabilisierung des Rotorschaftes 4 beziehungsweise dessen Axiallagerteil 44'.

Die Mittelachse 51 des Rotors ist gegenüber der Mittelachse 50 der statischen Lagerkomponente 27 in Richtung auf den Lagerzwickel 56 abgesenkt. Die radiale Justierung erfolgt entweder durch eine Justierung des Stützscheibenlagers 5 oder des Axiallagers 18. Dabei wird vorteilhaft das ganze Lager 5 oder 18 in einer in Fig. 1 angedeuteten Halterung innerhalb des Spinnaggregates 1 justiert. Diese exzentrische Anordnung des Rotorschaftes 4 mit seinem Axiallagerteil 44' innerhalb der statischen Lagerkomponente 27 bewirkt eine Verringerung der Spaltbreite zwischen den Stegen 45 und 46 und den Polscheiben 42 und 43 auf der dem Lagerzwickel 56 zugewandten Seite. Dabei ist dafür Sorge zu tragen, daß der Abstand noch groß genug ist, um eine Berührung der miteinander fluchtenden Metallkörper mit resultierender Beschädigung sowie Erhitzung zu vermeiden. Deshalb sollte ein Verhältnis von über 1 : 3 zwischen dem Versatz der Mittelachsen 50 und 51 und dem Durchmesserunterschied des Innendurchmessers der Polscheiben 42 und 43 zum Außendurchmesser der Stege 45 und 46 vermieden werden. Bei einem kleiner werdenden Verhältnis wird die Exzentrizität und damit deren beabsichtigte Wirkung zu gering.

Wie aus den Zeichnungsfiguren 2 und 3 ersichtlich ist, ist der Lagerspalt zwischen der Bohrung 57 im Ringeinsatz 39 auf der dem Lagerzwickel 56 zugewandten Seite größer, das heißt, etwa doppelt so groß wie der Ringspalt auf der gegenüberliegenden Seite. Dies wird dadurch erreicht, daß der Ringeinsatz 39 noch etwas weiter gegenüber der statischen Lagerkomponente 27 in Richtung auf den Lagerzwickel 56 verschoben ist als der Rotorschaft 4 selbst. Auch dadurch ist eine erhöhte Sicherheit gegeben, daß Stege 45,46 und Polscheiben 42,43 sich gegenseitig nicht berühren, wobei der Rotorschaft einen gleichbleibenden Durchmesser über seine gesamte Länge, d.h. auch unvermindert im Axiallagerteil 44' aufweisen kann. Es sind dementsprechend lediglich die Einstiche 47 für die Ausbildung der Stege 45,46 erforderlich. Dieser gleichbleibende Rotorschaftdurchmesser hat vor allem fertigungstechnische Vorteile gegenüber Rotoren mit zusätzlichen Abstufungen.

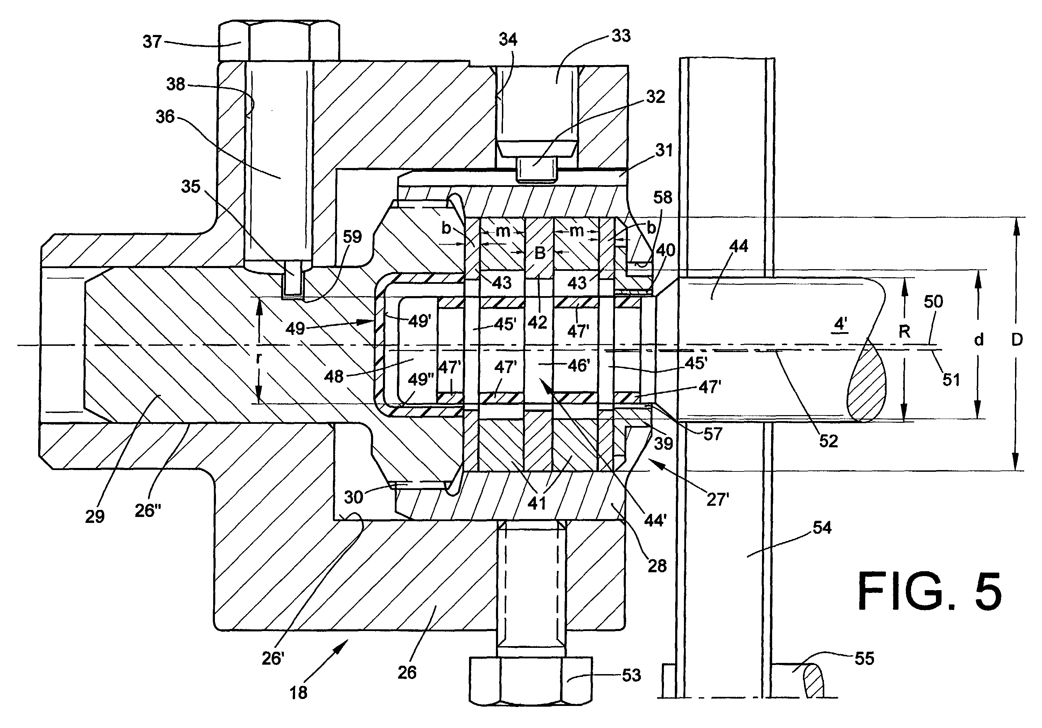

Eine Abstufung des Rotorschaftes 4' (siehe Fig 5) hat jedoch den Vorteil, daß der Rotorschaft im Bereich des Axiallagers 18 eine erhöhte Eigenfrequenz besitzt, die in Abhängigkeit von den übrigen Rotordimensionen und einer hohen Betriebsdrehzahl des Spinnrotors 3 die Laufruhe und damit insbesondere die Geräuschemission positiv beeinflußt.
Geht man davon aus daß der im Lagerzwickel 56 angeordnete Teil des Rotorschaftes 4*'* einen zum Beispiel aus Schwingungsgründen im Radiallagerbereich vorgegebenen Durchmesser R besitzt, führt eine Abstufung des Rotorschaftes 4 mit seinem auf einen geringeren Durchmesser r abgesetzten Axiallagerteil 44' zu einer Begrenzung der möglichen Tiefe der Einstiche 47', um die erforderliche Stabilität des Rotorschaftes in diesem Bereich nicht zu gefährden. Die absolute Einstichtiefe der Einstiche 47' reduziert sich unter Beibehaltung des 0,1 bis 0,3fachen des Stegdurchmessers gegenüber den Einstichen 47, wobei das 0,1fache zwar für die Stabilität des Rotorschaftes am besten ist, für die Erzielung einer maximalen Lagersteifigkeit aber die ungünstigere Variante darstellt. Beide Werte liegen jedoch im angegebenen Bereich in einem akzeptablen Rahmen. Als vorteilhaft hat sich ein Wert von 0,15 erwiesen.

Prinzipiell ist eine radiale Justierung des Ringeinsatzes 39 innerhalb der Bohrung 58 in der Lagerbuchse 28 möglich, insbesondere um die genannte Sicherheit der Vermeidung des Kontaktes der Polscheiben mit den Stegen zu maximieren, ohne jedoch ein Anlaufen des Rotorschaftes an den Ringeinsatz 39 während des Betriebes zu bewirken.

Durch die exzentrische Anordnung der Mittelachsen 50 und 51 wird dem Rotorschaft 4 beziehungsweise seinem Axiallagerteil 44' eine auf den Lagerzwickel 56 gerichtete radiale Kraftkomponente aufgeprägt, die die Lagersicherheit des Rotorschaftes 4 im Lagerzwickel 56 verbessert.

Wird bei Spinnunterbrechungen vor der Rotorreinigung die Andruckrolle 7 mit dem Tangentialriemen 6 vom Rotorschaft 4 abgehoben, führt die beschriebene, durch das Axiallager 18 erzeugte radiale Kraftkomponente zu einem leichten Verschwenken des Rotorschaftes 4 entgegen dem Uhrzeigersinn. Dadurch erhält der Rotorschaft 4 zunächst Kontakt zu einer reibwertreduzierten Oberflächenschicht 40, die einen Winkelbereich α von 90° innerhalb des Ringeinsatzes 39 überdeckt (Figur 3). Dabei wirkt sich der in diesem Bereich schmalere Ringspalt noch kippwinkelbegrenzend für den Rotorschaft 4 aus.

Des weiteren stützt sich der Rotorschaft 4 mit dem Schaftende 48 auf einer Stützfläche 49'' einer Hülse 49 ab, die insgesamt aus einem reibwertreduzierenden, verschleißgeschützten Material besteht. Durch einen nicht dargestellten Reibantrieb der Reinigungseinrichtung eines Anspinnwagens wird eine im wesentlichen axiale Kraft auf die Rotortasse 3 ausgeübt, die ein Anlaufen des Schaftendes 48 an eine Stützfläche 48' der Hülse 49 bewirkt. Durch das Zusammenwirken der Stützflächen 40 sowie 49' und 49'' wird eine solche Auslenkung des Rotorschaftes 4 verhindert, die zu einem Kontakt zwischen den Stegen 45 und 46 mit den dazu fluchtenden Polscheiben 42 und 43 führen könnte. Außerdem wird durch das reibwertreduzierende und gleichzeitig verschleißgeschützte Material der Stützflächen einer Erwärmung des Axiallagerteiles 44' des Rotorschaftes 4 entgegengewirkt. Als Material für die Hülse 49 beziehungsweise die Oberflächenschicht 40 kommt ein Kohlefaser- beziehungsweise Graphitwerkstoff in Frage.

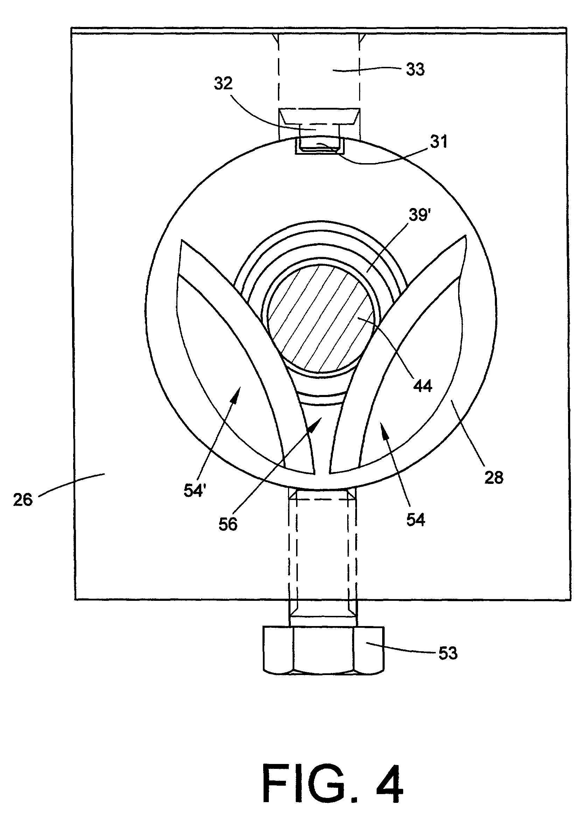

Alternativ zum Einsatz der Oberflächenschicht 40, die sich über einen Winkelbereich α erstreckt, ist es im Rahmen vorliegender Erfindung auch möglich, den gesamten Ringeinsatz 39' aus dem Material der Oberflächenschicht herzustellen (Fig 4). Andererseits ist es möglich, anstelle der Buchse 49, die vollständig aus einem reibwertreduzierenden Material besteht, nur die Stützfläche 49' und eine sich über den gleichen Winkelbereich α, wie innerhalb des Ringeinsatzes 39 erstreckende Oberflächenschicht für die Stützfläche 49'' vorzusehen, die der Oberflächenschicht 40 zwar axial beabstandet, radial jedoch gegenüberliegend, das heißt, um 180° verschwenkt angeordnet ist.

In Figur 4 ist des weiteren als Alternative noch zu erkennen, daß der Ringspalt zwischen Rotorschaft 4 und Ringeinsatz 39'gleichbleibend ist. Dabei ist die Gefahr des Kontaktes zwischen Rotorschaft 4 und Ringeinsatz 39' während des Betriebes der Spinneinrichtung gemindert. An dieser Stelle ist darauf hinzuweisen, daß selbstverständlich Justage und Ausbildung des Ringeinsatzes nicht den in den Figuren 3 und 4 dargestellten Zusammenhang aufweisen müssen.

Spinnrotoren werden zur Verschleißminderung mit einer gegen Verschleiß schützenden Beschichtung, z.B. einer Nickel/Diamantbeschichtung, versehen. Durch Abdeckung im Beschichtungsbad kann der Rotorschaft 4 auf seinem Axiallagerteil 44 ohne eine solche Beschichtung ausgestattet werden. Dadurch vermindert sich die Beanspruchung der Stützflächen 40, 49'und 49", so daß deren Lebensdauer sich erhöht.

## Patentansprüche

1. Lagerung eines Spinnrotors einer Offenend-Spinnvorrichtung,
- wobei der Rotor im Lagerzwickel einer Stützscheibenlagerung abgestützt und durch ein magnetisches Axiallager axial positioniert ist,
- wobei das Axiallager über eine statische Lagerkomponente (27) mit wenigstens zwei beidseits durch Polscheiben (42, 43) begrenzte axial polarisierte Permanentmagnetringe (41) verfügt, die so in einem Lagerkörper angeordnet sind, daß sich im Einbauzustand gleichsinnige Pole (N/N oder S/S) gegenüberstehen und
- wobei der Rotorschaft (4) mindestens drei im Abstand der Polscheiben angeordnete ferromagnetische Stege (46) aufweist,
**dadurch gekennzeichnet,**
**daß** die Stützscheibenlagerung (5) des Rotors (3) gegenüber der statischen Lagerkomponente (27) des Axiallagers (18) so angeordnet ist, daß die Mittelachse (51) des im Lagerzwickel (56) gehaltenen Rotors (3) gegenüber der Mittelachse (50) der statischen Lagerkomponente in Richtung auf den Lagerzwickel (56) versetzt ist und daß am den Stützscheiben (54, 54') zugewandten Teil der statischen Lagerkomponente (27) außerhalb der Magnet/Polscheibenanordnung (41, 42, 43) mindestens auf einem Winkelabschnitt α von 45° auf der dem Lagerzwickel (56) abgewandten Seite des Lagers eine zum Rotorschaft (4) im Betrieb beabstandeten Stützfläche eine reibwertreduzierende, verschleißgeschützte Oberflächenschicht (40) vorhanden ist, deren Abstand zum Rotorschaft (4) im Betrieb maximal die Hälfte des geringsten Abstandes zwischen Polscheiben und ferromagnetischen Stegen (45, 46) beträgt.

2. Lagerung nach Anspruch 1, **dadurch gekennzeichnet, daß** die Stützfläche (40) auf einem den Durchtritt des Rotorschaftes (4) in das Axiallager (18) gestattenden in eine Lagerbuchse (28) eingesetzten austauschbaren Ringeinsatz (39) angeordnet ist.

3. Lagerung nach Anspruch 2, **dadurch gekennzeichnet, daß** der Ringeinsatz (39*'*) aus einem reibwertreduzierenden, verschleißgeschützten Material besteht.

4. Lagerung nach Anspruch 1, 2 oder 3, **dadurch gekennzeichnet, daß** der Ringeinsatz (39,39') radial justierbar ist, so daß sich entweder ein gegenüber dem Rotorschaft (4, 4') gleicher Ringspalt oder ein auf der dem Lagerzwickel (56) abgewandten Seite schmalerer Ringspalt entsteht.

5. Lagerung nach Anspruch 2, 3 oder 4, **dadurch gekennzeichnet, daß** auf einer axial zum Rotorschaftende (48) im Betrieb beabstandeten Stützfläche (49') ebenfalls eine reibwertreduzierende, verschleißgeschützte Oberflächenschicht vorhanden ist.

6. Lagerung nach einem der Ansprüche 1 bis 5, **dadurch gekennzeichnet, daß** in Höhe des Schaftendes (48) des Rotors (4), welches außerhalb der Magnet-/Polscheibenanordnung (41, 42, 43) liegt, auf der dem Lagerzwickel (56) zugewandten Seite eine im Betrieb beabstandete Stützfläche (49'') mit einer reibwertreduzierten, verschleißgeschützten Oberflächenschicht vorhanden ist.

7. Lagerung nach Anspruch 5 oder 6, **dadurch gekennzeichnet, daß** die Stützflächen (49', 49'') durch eine Hülse (49) gebildet sind, die in einer Aufnahme (29) gehalten ist.

8. Lagerung nach Anspruch 7, **dadurch gekennzeichnet, daß** die Hülse (49) aus einem reibwertreduzierenden, verschleißgeschützten Material besteht.

9. Lagerung nach einem der Ansprüche 1 bis 8, **dadurch gekennzeichnet, daß** das reibwertreduzierende Material ein Kohlefaser- oder Graphitwerkstoff ist.

10. Lagerung nach einem der Ansprüche 1 bis 9, **dadurch gekennzeichnet, daß** das Verhältnis des Versatzes zwischen der Mittelachse (51) des Rotors (4) und der Mittelachse (50) der statischen Lagerkomponente (27) zur Differenz zwischen dem Innendurchmesser der Polringe (42, 43) und dem Außendurchmesser der ihnen gegenüberstehenden Stege (45, 46) 1 : 3,0 bis 1 : 8,0, vorzugsweise 1 : 4 bis 1 : 6,5, beträgt.

11. Lagerung nach Anspruch 10, **dadurch gekennzeichnet, daß** der Versatz der Mittelachse des Rotors gegenüber der Mittelachse der statischen Lagerkomponente 0,2 bis 1,0 mm, vorzugsweise 0,25 bis 0,4 mm, beträgt.

12. Lagerung nach einem der Ansprüche 1 bis 11, **dadurch gekennzeichnet, daß** sich eine verschleißmindernde Beschichtung des Spinnrotors (4) auf den außerhalb der Axiallagerung (18) liegenden Teil (44) des Spinnrotors (4) beschränkt.

13. Lagerung nach einem der Ansprüche 1 bis 12, **dadurch gekennzeichnet, daß** die Permanentmagnetringe (41) ein Verhältnis des Außendurchmessers D zum Innendurchmesser d von 1,5 : 1 bis 2,8 : 1, vorzugsweise 1,7 : 1 bis 1,8 : 1, aufweisen, und eine Breite m besitzen, die sich zur Breite b der äußeren Polscheiben, wie 2,5 : 1 bis 5,0 : 1, vorzugsweise 3,0 : 1 bis 3,9 : 1, und zu einer Breite B einer zwischen den Permanentmagnetringen liegenden Polscheibe, wie 1,3 : 1 bis 2,5 : 1, vorzugsweise 1,5 : 1 bis 2,0 : 1, verhält.

14. Lagerung nach Anspruch 13, **dadurch gekennzeichnet, daß** die Breite b der äußeren Polscheiben 0,5 bis 1,5 mm beträgt, während die Breite B zwischen den Permanentmagnetringen liegenden Polscheibe 1,0 bis 3,0 mm beträgt.

15. Lagerung nach Anspruch 14, **dadurch gekennzeichnet, daß** die Breite (B, b) der Polscheiben (42, 43) der Breite der mit den Polscheiben fluchtenden ferromagnetischen Stege (45, 46) zwischen mit einem nichtmagnetischen Werkstoff gefüllten Einstichen (47) im Rotorschaft (4) des Spinnrotors (3) entspricht.

16. Lagerung nach Anspruch 15, **dadurch gekennzeichnet, daß** der nichtmagnetische Werkstoff Kupfer oder eine Kupferlegierung ist.

17. Lagerung nach einem der Ansprüche 13 bis 16, **dadurch gekennzeichnet, daß** die Permanentmagnetringe (41) Seltenerdmagnete sind.

18. Lagerung nach einem der Ansprüche 13 bis 17, **dadurch gekennzeichnet daß** alle gegenüberliegenden Kanten von Polscheiben (42, 43) und Stegen (45, 46) unverrundet sind.

19. Lagerung nach einem der Ansprüche 13 bis 18, **dadurch gekennzeichnet, daß** der Rotorschaft (4) einen über seine gesamte Länge gleichbleibenden Durchmesser aufweist.

20. Lagerung nach einem der Ansprüche 13 bis 18, **dadurch gekennzeichnet, daß** der Rotorschaft (4) in seinem Axiallagerteil 44' einen gegenüber dem Durchmesser R des übrigen außerhalb des Axiallagers angeordneten Teil 44 eine um 1/8 bis 1/2, vorzugsweise 1/4 bis 3/8, reduzierten Rotorschaftdurchmesser r aufweist, der durch die Einstiche (47) nochmals abgesetzt ist, wobei die statischen Lagerkomponenten (27) zur zumindest annähernden Beibehaltung der Spaltbreiten zwischen den Polscheiben (42,43) und den Stegen 45,46 angepaßt sind.

21. Lagerung nach Anspruch 19 oder 20, **dadurch gekennzeichnet, daß** die Tiefe der Einstiche (47;47')) das 0,1 bis 0,3fache des Durchmessers der Stege (45',46') beträgt.

## Claims

1. Bearing arrangement of a spinning rotor of an open-end spinning device,
- wherein the rotor is supported in the bearing gusset of a support disc bearing arrangement and is axially positioned by a magnetic thrust bearing,
- wherein the thrust bearing has a static bearing component (27) with at least two permanent magnetic rings (41) which are delimited on both sides by pole discs (42, 43) and are axially polarised and which are arranged in a bearing member in such a way that equidirectional poles (N/N or S/S) oppose one another in the fitted state and
- wherein the rotor shaft (4) has at least three ferromagnetic webs (46) arranged with the spacing of the pole discs,
**characterised in that** the support disc bearing arrangement (5) of the rotor (3) is arranged with respect to the static bearing component (27) of the thrust bearing (18) in such a way that the centre line (51) of the rotor (3) held in the bearing gusset (56) is offset relative to the centre line (50) of the static bearing component in the direction of the bearing gusset (56) and **in that** on the part of the static bearing component (27) facing the support discs (54, 54') outside the magnet/pole disc arrangement (41, 42, 43) at least on an angular portion α of 45° on the side of the bearing remote from the bearing gusset (56), there is a support face spaced during operation from the rotor shaft (4) with a coefficient of friction-reducing, wear-protected surface layer (40), the spacing of which from the rotor shaft (4) during operation is at most half of the smallest spacing between pole discs and ferromagnetic webs (45,46).

2. Bearing arrangement according to claim 1, **characterised in that** support face (40) is arranged on a replaceable annular insert (39) allowing passage of the rotor shaft (4) into the thrust bearing (18) and inserted into a bearing bush (28).

3. Bearing arrangement according to claim 2, **characterised in that** the annular insert (39') consists of a coefficient of friction-reducing, wear-protected material.

4. Bearing arrangement according to claim 1, 2 or 3, **characterised in that** the annular insert (39, 39') can be radially adjusted, so either an annular gap which is identical relative to the rotor shaft (4, 4') or an annular gap which is narrower at the side remote from the bearing gusset (56), is produced.

5. Bearing arrangement according to claim 2, 3 or 4, **characterised in that** there is also a coefficient of friction-reducing, wear-protected surface layer on a support face (49') which is axially spaced from the rotor shaft end (48) during operation.

6. Bearing arrangement according to any one of claims 1 to 5, **characterised in that** there is a support face (49") which is spaced during operation on the side facing the bearing gusset (56), with a coefficient of friction-reduced, wear-protected surface layer at the level of the shaft end (48) of the rotor (4) located outside the magnet/pole disc arrangement (41, 42, 43).

7. Bearing arrangement according to claim 5 or 6, **characterised in that** the support faces (49', 49'') are formed by a sleeve (49) held in a receiver (29).

8. Bearing arrangement according to claim 7, **characterised in that** the sleeve (49) consists of a coefficient of friction-reducing, wear-protected material.

9. Bearing arrangement according to any one of claims 1 to 8, **characterised in that** the coefficient of friction-reducing material is a carbon fibre or graphite material.

10. Bearing arrangement according to any one of claims 1 to 9, **characterised in that** the ratio of the offset between the centre line (51) of the rotor (4) and the centre line (50) of the static bearing component (27) to the difference between the internal diameter of the pole rings (42, 43) and the external diameter of the webs opposing them (45, 46) is 1:3.0 to 1:8.0, preferably 1:4 to 1:6.5.

11. Bearing arrangement according to claim 10, **characterised in that** the offset of the centre line of the rotor relative to the centre line of the static bearing component is 0.2 to 1.0 mm, preferably 0.25 to 0.4 mm.

12. Bearing arrangement according to any one of claims 1 to 11, **characterised in that** a wear-reducing coating of the spinning rotor (4) is limited to the part (44) of the spinning rotor (4) located outside the axial betting (18).

13. Bearing arrangement according to any one of claims 1 to 12, **characterised in that** the permanent magnetic rings (41) have a ratio of the external diameter D to the internal diameter d of 1.5:1 to 2.8:1, preferably 1.7:1 to 1.8:1 and have a width m with a ratio to the width b of the outer pole discs of 2.5:1 to 5.0:1, preferably 3.0:1 to 3.9:1, and to a width of a pole disc located between the permanent magnetic rings of 1.3:1 to 2.5:1, preferably 1.5:1 to 2.0:1.

14. Bearing arrangement according to claim 13, **characterised in that** the width b of the outer pole discs is 0.5 to 1.5 mm, while the width B of the pole disc located between the permanent magnetic rings is 1.0 to 3.0 mm.

15. Bearing arrangement according to claim 14, **characterised in that** the width (B, b) of the pole discs (42, 43) corresponds to the width of the ferromagnetic webs (45, 46) aligning with the pole discs between recesses (47) in the rotor shaft (4) of the spinning rotor (3) filled with a non-magnetic material.

16. Bearing arrangement according to claim 15, **characterised in that** the non-magnetic material is copper or a copper alloy.

17. Bearing arrangement according to any one of claims 13 to 16, **characterised in that** the permanent magnetic rings (41) are rare-earth magnets.

18. Bearing arrangement according to any one of claims 13 to 17, **characterised in that** all the opposing edges of pole discs (42, 43) and webs (45, 46) are unrounded.

19. Bearing arrangement according to any one of claims 13 to 18, **characterised in that** the rotor shaft (4) has a diameter which remains the same over its entire length.

20. Bearing arrangement according to any one of claims 13 to 18, **characterised in that** the rotor shaft (4) in its thrust bearing part (44') has a rotor shaft diameter r which is reduced relative to the diameter R of the remaining part (44) arranged outside the thrust bearing by 1/8 to 1/2, preferably 1/4 to 3/8, the rotor shaft diameter r being further reduced by recesses (47), the static bearing components (27) being adapted for at least virtual retention of the gap widths between the pole discs (42, 43) and the webs (45, 46).

21. Bearing arrangement according to claim 19 or 20, **characterised in that** the depth of the recesses (47; 47') is 0.1 to 0.3 times the diameter of the webs (45', 46').

## Revendications

1. Palier pour un rotor de filage dans un métier à filer à bout libre
- le rotor étant appuyé dans le gousset de logement d'un palier de disque d'appui et étant positionné dans le sens axial par un palier axial magnétique,
- le palier axial disposant d'une composante de palier statique (27) avec au moins deux bagues magnétiques permanentes (41) à polarisation axiale délimitées des deux côtés par des disques polaires (42, 43), qui sont disposées de telle manière dans un corps de palier que dans l'état monté, des pôles de même sens (N/N ou S/S) se trouvent en opposition réciproque et
- la tige de rotor (4) comprenant au moins trois entretoises ferromagnétiques (46) disposées avec un espacement par rapport aux disques polaires,
**caractérisé en ce que** le palier de disque d'appui (5) du rotor (3) est disposé de telle manière par rapport à la composante de palier statique (27) du palier axial (18) que l'axe médian (51) du rotor (3) maintenu dans le gousset de logement (56) soit décalé en direction du gousset de logement (56) par rapport à l'axe médian (50) de la composante de palier statique et **en ce que** sur la partie de la composante de palier statique (27) dirigée vers les disque d'appui (54, 54'), en dehors du groupe composé des disques magnétiques et des disques polaires (41, 42, 43) et au moins sur une section d'angle α de 45° sur le côté du palier opposé au gousset de logement (56) se trouve une surface d'appui espacée par rapport à la tige de rotor (4) lors du fonctionnement et comprenant une couche de surface (40) réduisant le coefficient de frottement et protégée contre l'usure, dont l'espacement par rapport à la tige de rotor (4) est, lors du fonctionnement, d'au maximum la moitié de l'espacement le plus faible entre les disques polaires et les entretoises ferromagnétiques (45, 46).

2. Palier selon la revendication 1, **caractérisé en ce que** la surface d'appui (40) est disposée sur un insert d'anneau interchangeable (39) permettant le passage de la tige de rotor (4) dans le palier axial (18) et placé dans un coussinet de palier (28).

3. Palier selon la revendication 2, **caractérisé en ce que** l'insert d'anneau (39) se compose d'un matériau réduisant le coefficient de frottement et protégé contre l'usure.

4. Palier selon la revendication 1, 2 ou 3, **caractérisé en ce que** l'insert d'anneau (39, 39') peut être ajusté dans le sens radial, de sorte qu'une fente annulaire égale par rapport à la tige de rotor (4, 4'), ou une fente annulaire plus étroite du côté opposé au gousset de logement (56) est obtenue.

5. Palier selon la revendication 2, 3 ou 4, **caractérisé en ce que** qu'une couche de surface réduisant le coefficient de frottement et protégée contre l'usure est également prévue sur une surface d'appui (49') espacée dans le sens axial par rapport à l'extrémité (48) de la tige de rotor lors du fonctionnement.

6. Palier selon l'une des revendications 1 à 5, **caractérisé en ce qu'**à la hauteur de l'extrémité de la tige (48) du rotor (4), qui se trouve en dehors du groupe composé des disques magnétiques et des disques polaires (41, 42, 43), sur le côté dirigé vers le gousset de logement (56) se trouve une surface d'appui (49') espacée lors du fonctionnement et comprenant une couche de surface réduisant le coefficient de frottement et protégée contre l'usure.

7. Palier selon la revendication 5 ou 6, **caractérisé en ce que** les surfaces d'appui (49', 49") sont formées par une douille (49), qui est maintenue dans un réceptacle (29).

8. Palier selon la revendication 7, **caractérisé en ce que** la douille (49) se compose d'un matériau réduisant le coefficient de frottement et protégé contre l'usure.

9. Palier selon l'une des revendications 1 à 8, **caractérisé en ce que** le matériau réduisant le coefficient de frottement est un matériau à base de fibres de carbone ou de graphite.

10. Palier selon l'une des revendications 1 à 9, **caractérisé en ce que** le rapport entre le déport de l'axe médian (51) du rotor (4) vis-à-vis de l'axe médian (50) de la composante de palier statique (27) et la différence entre le diamètre intérieur des anneaux polaires (42, 43) et le diamètre extérieur des entretoises (45, 46) qui leur sont opposées est de 1 : 3,0 à 1 : 8,0 et de préférence de 1 : 4 à 1 : 6,5.

11. Palier selon la revendication 10, **caractérisé en ce que** le déport entre l'axe médian du rotor et l'axe médian de la composante de palier statique est de 0,2 à 1,0 mm et de préférence de 0,25 à 0,4 mm.

12. Palier selon l'une des revendications 1 à 11, **caractérisé en ce qu'**un revêtement réduisant l'usure du rotor de filage (4) se limite à la partie (44) du rotor de filage (4) située à l'extérieur du palier axial (18).

13. Palier selon l'une des revendications 1 à 12, **caractérisé en ce que** les bagues magnétiques permanentes (41) présentent un rapport entre le diamètre extérieur D et le diamètre intérieur d de 1,5 : 1 à 2,8 : 1 et de préférence de 1,7 : 1 à 1,8 : 1 et ont une largeur m qui présente avec la largeur b des disques polaires extérieurs un rapport de 2,5 : 1 à 5,0 : 1 et de préférence de 3,0 : 1 à 3,9 : 1 et avec une largeur d'un disque polaire situé entre les bagues magnétiques permanentes un rapport de 1,3 : 1 à 2,5 : 1 et de préférence de 1,5 : 1 à 2,0 : 1.

14. Palier selon la revendication 13, **caractérisé en ce que** la largeur b des disques polaires extérieurs est de 0,5 à 1,5 mm, tandis que la largeur B des disques polaires situés entre les bagues magnétiques permanentes est de 1,0 à 3,0 mm.

15. Palier selon la revendication 14, **caractérisé en ce que** la largeur (B, b) des disques polaires (42, 43) correspond à la largeur des entretoises ferromagnétiques (45, 46) entre des encoches (47) dans la tige de rotor (4) du rotor de filage (3) remplies d'un matériau amagnétique, qui sont en alignement avec les disques polaires.

16. Palier selon la revendication 15, **caractérisé en ce que** le matériau amagnétique est du cuivre ou un alliage de cuivre.

17. Palier selon l'une des revendications 13 à 16, **caractérisé en ce que** les bagues magnétiques permanentes (41) sont des aimants de terres rares.

18. Palier selon l'une des revendications 13 à 17, **caractérisé en ce que** la totalité des bords opposés des disques polaires (42, 43) et des entretoises (45, 46) ne sont pas arrondis.

19. Palier selon l'une des revendications 13 à 18, **caractérisé en ce que** la tige de rotor (4) présente un diamètre qui reste constant sur toute sa longueur.

20. Palier selon l'une des revendications 13 à 18, **caractérisé en ce que** dans sa partie de palier axial (44'), la tige de rotor (4) présente par rapport au diamètre R de l'autre partie (44) disposée en dehors du palier axial un diamètre r de tige de rotor réduit de 1/8 à 1/2 et de préférence de 1/4 à 3/8, qui est encore réduit par les encoches (47), les composants de palier statiques (27) étant adaptés pour un maintien au moins approximatif des largeurs de fentes entre les disques polaires (42, 43) et les entretoises (45, 46).

21. Palier selon la revendication 19 ou 20, **caractérisé en ce que** la profondeur des encoches (47, 47') représente 0,1 à 0,3 fois le diamètre des entretoises (45', 46').
